(19) Europäisches Patentamt
European Patent Office
Office européen des brevets

(11) **EP 4 299 165 A1**

(12) **EUROPEAN PATENT APPLICATION**

(43) Date of publication:
**03.01.2024   Bulletin 2024/01**

(21) Application number: **22182210.9**

(22) Date of filing: **30.06.2022**

(51) International Patent Classification (IPC):
**B01D 63/06** (2006.01)     **B01D 63/08** (2006.01)
**B01D 65/00** (2006.01)     **B01D 71/16** (2006.01)
**B01D 67/00** (2006.01)

(52) Cooperative Patent Classification (CPC):
**B01D 71/16; B01D 63/06; B01D 63/061;**
**B01D 63/08; B01D 63/081; B01D 65/003;**
**B01D 67/0093;** B01D 2313/04; B01D 2323/02

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Sartorius Stedim Biotech GmbH**
**37079 Göttingen (DE)**

(72) Inventors:
• **METZE, Michael**
**37079 Göttingen (DE)**
• **STEGELMEIER, Corinna**
**37079 Göttingen (DE)**
• **TANTZEN, Christof**
**37079 Göttingen (DE)**

(74) Representative: **Müller-Boré & Partner**
**Patentanwälte PartG mbB**
**Friedenheimer Brücke 21**
**80639 München (DE)**

(54)     **FILTER MODULE, METHOD OF PRODUCING THE SAME, AND USE THEREOF**

(57)     The present invention relates to a filter module comprising an ester-based membrane and at least one boundary member, wherein the peripheral region of the membrane is connected to the at least one boundary member, and wherein the surface of the membrane is saponified in the regions other than the peripheral region connected to the at least one boundary member. Further, the present invention relates to a method of producing such filter module and to the use of such filter module.

Figure 1

EP 4 299 165 A1

**Description**

The present invention relates to a filter module, to a method of producing such filter module, and to the use of such filter module.

Filter modules which are commonly used for sterile filtration or other filtration techniques are characterized in that the peripheral region of the filter membrane, simply referred to herein as membrane, is connected to a member which serves as its boundary, also referred to herein as boundary member. Without being limited thereto, the boundary member may be an end cap, e.g. in case of a membrane having a tubular shape, or may be a frame, e.g. in case of a membrane having a flat shape. Depending on the shape of the membrane, connecting the peripheral region thereof to the boundary member may be achieved by various different means including embedding, overmolding, hydrophobic gluing, or ultrasonic welding. As required, more than one boundary member may be used for being connected to the peripheral region of the membrane. In each case, the peripheral region of the membrane must be connected to the boundary member with the aim to ensure sterility of the obtained filter module.

The connection of the peripheral region of the membrane to the boundary member proves to be inadequate when materials are used for the membrane and the boundary member, which are not compatible with each other. Typically, as the material of the boundary member, low-melting thermoplastics are made use of. With low-melting thermoplastics such as polyolefins, e.g. polypropylene, being hydrophobic, the material of the membrane should be hydrophobic as well in order to achieve an adequate, i.e. fluid-tight, connection.

Nowadays, before being used in industrial biopharmaceutical applications, filter modules have to be tested for leakage and pass a so-called integrity test. In order to do so, it is essential that the surface of the membrane spontaneously wets with water. Otherwise, the integrity test cannot be performed, which means that the filter modules cannot be tested for leakage with the consequence that they have to be discarded.

Filter modules which comprise a membrane made of ester like cellulose acetate, for instance, are difficult to wet after they have been completely dried. A spontaneous wetting with water can be achieved by adding auxiliary substances such as glycerin or suitable surfactants, thereby rendering the membrane surface more hydrophilic. The addition of such auxiliary substances is, however, disadvantageous as it may have an adverse effect on the filtration properties and/or may contaminate the filtrate.

In principle, in order to render the surface of a membrane made of cellulose acetate more hydrophilic, the surface may be saponified so that it can spontaneously wet with water. During such saponification, the acetate groups present on the surface of the membrane are hydrolyzed, which means that the surface becomes cellulose while the bulk of the membrane remains cellulose acetate. In contrast to cellulose acetate, which is more hydrophobic, cellulose is more hydrophilic. However, the connection of the peripheral region of the membrane to the boundary member for building up the filter module proves to be inadequate, since the hydrophilic surface of the membrane is not compatible with the hydrophobic boundary member. Hence, the obtained filter module does not satisfy the required fluid-tightness and cannot be used for sterile filtration or other filtration techniques.

Further, there have been developed membranes made of cellulose acetate which are fully saponified and reinforced with a nonwoven. Specifically, the nonwoven which is integrated into the membrane structure may be composed of core-sheath fibers. When connecting the peripheral region of the membrane to the boundary member, e.g. by applying one of the means mentioned above, the nonwoven softens as a result of heat input, thereby achieving an adequate connection. However, the performance of the membrane may suffer from the presence of a nonwoven used for reinforcement with the result that the obtained filter module cannot be used for sterile filtration or other filtration techniques.

As an alternative approach, which is described in EP 3 490 695 B1, for instance, there have been developed membranes made of cellulose acetate which are fully saponified and crosslinked instead of being reinforced with a nonwoven. Crosslinking reduces the shrinkage and swelling behavior of the membrane in water which is due to the hydrophilic cellulose, thereby improving the mechanical stability of the membrane. However, the connection still proves to be inadequate for the reasons outlined above. Consequently, the obtained filter module cannot be used for sterile filtration or other filtration techniques.

Accordingly, in view of the above, it is an object of the present invention to provide a filter module which shall allow for a spontaneous wetting of the membrane with water while at the same time being characterized by an adequate connection of the peripheral region of the membrane to the boundary member as well as by a high performance of the membrane so that the filter module can be suitably used for sterile filtration or other filtration techniques.

The above object has been solved by providing the embodiments characterized in the claims.

In a first aspect of the present invention, there is provided a filter module comprising an ester-based membrane and at least one boundary member,

wherein the peripheral region of the membrane is connected to the at least one boundary member, and
wherein the surface of the membrane is saponified in the regions other than the peripheral region connected to the at least one boundary member.

As found by the present inventors, when saponification is carried out after connecting the peripheral region of the membrane to the at least one boundary member, also referred to herein as inline saponification, the peripheral region of the membrane connected to the at least one boundary member remains unaffected. The reason therefor is that the ester groups present in the peripheral region do not come into contact with the solution used for saponification with the result that they are not hydrolyzed. Accordingly, inline saponification may only affect the regions other than the peripheral region of the membrane connected to the at least one boundary member. As a result, fluid-tightness which is required for sterile filtration or other filtration techniques is maintained. On the other hand, the ester groups present in the regions other than the peripheral region of the membrane connected to the at least one boundary member are partially hydrolyzed as they come into contact with the solution used for saponification. Accordingly, in these regions, inline saponification renders the surface of the membrane hydrophilic with the result that spontaneous wetting with water becomes possible so that the filter module can be tested for leakage and pass the integrity test or any other process control measure. By controlling the extent of hydrolyzation, it can be ensured that only the surface but not the bulk of the membrane is saponified in the regions other than the peripheral region of the membrane connected to the at least one boundary member. As a result, the membrane is still characterized by overall physicochemical properties which are characteristic for a membrane made of ester. Specifically, the membrane does not significantly shrink and swell in water and retains its mechanical stability, while at the same time exhibiting a high performance. Advantageously, due to its hydrophilic surface in the regions other than the peripheral region connected to the at least one boundary member, the membrane absorbs only small amounts of proteins or polysorbates with the result that industrial biopharmaceutical applications are less affected by adsorption phenomena compared to a membrane made of ester having a hydrophobic surface.

In the following, the filter module according to the present invention, comprising an ester-based membrane and at least one boundary member, is described in detail.

Herein, the expression "ester-based" shall emphasize that the membrane of the filter module according to the present invention not only contains ester groups such as carboxylic acid ester groups (-O-CO-R), sulfonic acid ester groups (-O-SO$_2$-R), or the like, but also contains hydroxy groups (-O-H), which originate from the ester groups as a result of inline saponification. On the other hand, the expression "made of ester" shall refer to a membrane which has not yet been subject to (inline) saponification. Accordingly, an ester-based membrane is obtainable from a membrane made of ester by subjecting the same to (inline) saponification. That is, the membrane made of ester serves as a precursor of the ester-based membrane.

As long as the ester groups present on the surface of the membrane can be hydrolyzed, the ester constituting the membrane is not further limited. For example, it may be selected from the group consisting of cellulose esters, agarose esters, and viscose esters. In general, any esterified polysaccharide may serve as the material of the membrane. Besides, for esterification of the polysaccharide, any suitable carboxylic acid (HO-CO-R), sulfonic acid (HO-SO$_2$-R), or the like may be used. Preferably, the ester constituting the membrane is a cellulose ester, among which cellulose acetate, cellulose propionate, cellulose acetate propionate, and cellulose butyrate may be mentioned, without, however, being limited thereto. In a preferred embodiment, the cellulose ester is cellulose acetate which is widely used as a material of filter membranes.

Depending on the intended use of the filter module, i.e. depending on the size of the particles to be separated, the ester-based membrane has a suitable pore size. Typical pore sizes are in the range from 0.005 $\mu$m to 10 $\mu$m, with a pore size in the range from 0.01 $\mu$m to 1.2 $\mu$m being preferable, and with a pore size in the range from 0.02 $\mu$m to 0.45 $\mu$m being more preferable.

Herein, for determining pore sizes which are equal to or more than 0.1 $\mu$m, capillary flow porometry is applied. Capillary flow porometry is a gas-liquid porosimetry technique in which the differential gas pressures and flow rates through a membrane sample are measured first in the wet state and then in the dry state. Before the measurement, the membrane sample is contacted with a wetting liquid such that all pores present are filled with said wetting liquid. Once the pores are filled, the membrane sample is introduced into the measurement cell. After closing the measurement cell and starting the measurement, the gas pressure is increased in an automatic and stepwise manner, and the pore diameters in accordance with the pressure being applied are emptied as a result of the gas pressure. This is done until all the relevant pore sizes have been captured, i.e. until even the smallest pores present in the measurement range have been cleared of the liquid. Thereafter, the pressure is dropped back down, and the measurement is automatically repeated on the now dry membrane sample. From the difference between the two pressure/flow rate curves, the pore size distribution is calculated via the Young-Laplace equation (see also A. Shrestha, "Characterization of porous membranes via porometry", 2012, Mechanical Engineering Graduate Theses & Dissertations, Paper 38, University of Colorado at Boulder).

On the other hand, herein, for determining pore sizes which are equal to or less than 0.1 $\mu$m, liquid-liquid displacement porosimetry is applied. As known to the skilled person, liquid-liquid displacement porosimetry has similarities to capillary flow porometry. However, it is not the gas flow rates that are measured but rather the flow rates of the liquid which is displaced as a function of the differential pressure increase (see also R. Davila, "Characterization of ultra and nanofiltration commercial filters by liquid-liquid displacement porosimetry", 2013).

Concerning the thickness of the ester-based membrane, the present invention is likewise not subject to any particular limitation. For example, the membrane may have a thickness in the range from 20 $\mu$m to 400 $\mu$m, preferably in the range from 100 $\mu$m to 300 $\mu$m. The thickness of the membrane is measured using a commercial film thickness gauge with a scale value of 1 $\mu$m (HAHN+KOLB Werkzeuge GmbH, Ludwigsburg, Germany).

In the same way, the geometric shape of the ester-based membrane is not further limited. For example, the membrane may have a tubular shape. To this end, a membrane which is rectangular in shape may be closed by means of ultrasonic welding. As a result, a cylindrical arrangement with two open end faces is obtained. Each of these two open end faces may be regarded as the peripheral region to be connected to the respective boundary member, e.g. by embedding the peripheral region of the membrane in the boundary member after softening the boundary member. As required, before it is closed to form a tube, the membrane which is rectangular in shape may be pleated. Thereby, the filtration area of the membrane can be increased while the overall size of the geometric shape of the membrane remains the same. In general, filter modules which comprise a membrane having a tubular shape, which is optionally pleated, are referred to as filter cartridges. In this case, the at least one boundary member is typically an end cap. Instead of a tubular shape, the membrane may also have a flat shape, which means that the perimeter of the membrane may be regarded as the peripheral region to be connected to the respective boundary member, e.g. by overmolding, hydrophobic gluing, or ultrasonic welding the boundary member to the peripheral region of the membrane. In general, filter modules which comprise a membrane having a flat shape are referred to as flat sheet filters or flat sheet modules. In this case, the at least one boundary member is typically a frame.

According to the present invention, the membrane may be obtained by any suitable means known in the art. Without limitation, a typical production process includes the step of casting a solution comprising the ester dissolved in an organic solvent, followed by the step of forming a film from the cast solution either by means of evaporation or by means of contacting with a liquid precipitation bath or the like, thereby inducing phase separation to yield the membrane. Details thereof are described in DE 103 26 741 B4 and WO 2020/260473 A1, for instance.

In case of embedding, for instance, in order to be connected to the peripheral region of the membrane, the boundary member or at least a part thereof must be capable of being softened. For this reason, low-melting thermoplastics are typically used as the material of the boundary member. Being hydrophobic, low-melting thermoplastics are compatible with the ester constituting the membrane so that a fluid-tight connection can be achieved. For example, the at least one boundary member is formed from a polyolefin, among which polyethylene, polypropylene, and poly(ethylene propylene) may be mentioned, without, however, being limited thereto. In a preferred embodiment, the polyolefin is polypropylene which is widely used as a material of boundary members.

The geometric shape of the at least one boundary member is not further limited as long as the peripheral region of the membrane can be connected thereto. A person skilled in the art selects a suitable geometric shape for the at least one boundary member depending on the intended use of the filter module. As a matter of course, the geometric shape of the at least one boundary member needs to be harmonized with the geometric shape of the membrane. In case of two or more boundary members, each boundary member may have an individual geometric shape, if necessary.

As required, apart from the ester-based membrane and the at least one boundary member, the filter module may comprise additional components such as a backflow safeguard and/or a core, for instance. Depending on the intended use of the filter module, a person skilled in the art selects a suitable backflow safeguard and/or a suitable core for the filter module. Besides, the filter module may comprise one or more drainage or support nonwovens as an additional component, which may be arranged on one or on both sides of the membrane. Like the membrane, these one or more drainage or support nonwovens may be pleated.

As required, the membrane may be reinforced with a nonwoven. However, and as already outlined above, the performance of the membrane may suffer from the presence of a nonwoven used for reinforcement. Besides, since saponification is carried out after connecting the peripheral region of the membrane to the at least one boundary member, the presence of such nonwoven is not necessary for achieving an adequate connection.

According to the present invention, the surface of the membrane is saponified in the regions other than the peripheral region connected to the at least one boundary member. That is, in the peripheral region of the membrane connected to the at least one boundary member, neither the surface nor the bulk of the membrane is saponified. As a result, fluid-tightness which is required for sterile filtration or other filtration techniques is maintained. At the same time, since the surface of the membrane is saponified in the regions other than the peripheral region connected to the at least one boundary member, spontaneous wetting with water becomes possible so that the filter module can be tested for leakage and pass the integrity test or any other process control measure. In the regions other than the peripheral region connected to the at least one boundary member, the bulk of the membrane is prevented from being saponified by controlling the extent of hydrolyzation. As a result, the membrane does not significantly shrink and swell in water and retains its mechanical stability, while at the same time exhibiting a high performance.

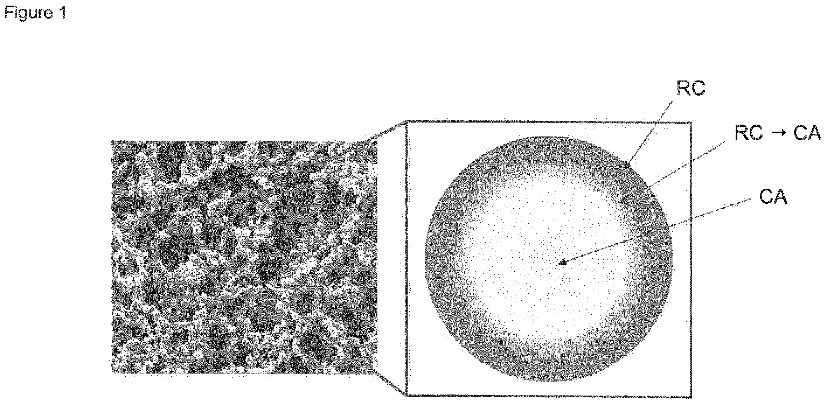

As known to the skilled person, a membrane obtained by phase separation has a sponge-like structure. In Figure 1, there is shown a scanning electron microscopy (SEM) image of the sponge-like structure of a membrane made of cellulose acetate, the surface of which has been saponified. As schematically illustrated in Figure 1, the sponge-like structure consists of interconnected elements having a circular cross-section. Since only the surface of the membrane has been saponified, the center of the circular cross-section is still constituted by cellulose acetate (CA). Further, it can be seen from Figure 1 that the center of the circular cross-section is enclosed by an outer annulus constituted by cellulose that is formed as a result of saponification, also referred to as regenerated cellulose (RC). By definition, the center of the circular cross-section represents the bulk of the membrane, which has not been saponified, thus having a saponification degree $SaD_{bulk}$ of about 0%, while the outer annulus of the circular cross-section represents the surface of the membrane, which has been saponified, thus having a saponification degree $SaD_{surface}$ of about 100%. Between the center and the outer annulus of the cross-section, there is located an inner annulus which represents a transition region of the membrane. The transition region is characterized in that it has a saponification degree SaDtransition region that gradually transitions from about 0% to about 100% from the bulk to the surface of the membrane. That is, in the transition region, the membrane has been saponified to some extent only. Accordingly, the inner annulus is constituted by both cellulose acetate and regenerated cellulose to a varying degree. Herein, the saponification degree is defined as the ratio of the number of ester groups which have been hydrolyzed as a result of saponification to the total number of ester groups which are present in the respective region of the membrane under consideration.

When considering the membrane of the filter module as a whole, the saponification degree $SaD_{membrane}$ which takes the entire circular cross-section into account is preferably in the range from 15% to 75%, more preferably in the range from 20% to 55%, in the regions other than the peripheral region connected to the at least one boundary member. The larger the saponification degree $SaD_{membrane}$, the smaller the center of the circular cross-section representing the bulk of the membrane, which has not been saponified.

By determining the mass proportion of those parts of the membrane sample which have been saponified, it is possible to derive the saponification degree $SaD_{membrane}$. For instance, in case of a membrane made of cellulose acetate yielding regenerated cellulose when subject to inline saponification, a saponification degree $SaD_{membrane}$ in the range from 15% to 75% roughly derives from a mass proportion of RC in the range from 10 mass% to 65 mass%, and a saponification degree $SaD_{membrane}$ in the range from 20% to 55% roughly derives from a mass proportion of RC in the range from 15 mass% to 45 mass%. Details for determining the saponification degree $SaD_{membrane}$ are provided in the Examples further below.

In this context, it is emphasized again that in the peripheral region of the membrane connected to the at least one boundary member, the ester groups do not come into contact with the solution used for saponification. Thus, in each case, the respective saponification degrees only refer to the regions other than the peripheral region of the membrane connected to the at least one boundary member. The extent of hydrolyzation in the regions other than the peripheral region of the membrane connected to the at least one boundary member can be controlled by appropriately setting the conditions applied during the production of the filter module as described further below in more detail.

As mentioned above, since only the surface but not the bulk of the membrane is saponified in the regions other than the peripheral region of the membrane, the membrane is still characterized by overall physicochemical properties which are characteristic for a membrane made of ester, including a small shrinking and swelling behavior in water. As known to the skilled person, the shrinking and swelling behavior in water is represented by the dimensional change occurring when a dry membrane expands during wetting with water and when the wetted membrane contracts again during subsequent drying. Typically, once wetted with water followed by drying, the membrane contracts beyond its original size. The dimensional change which is representative for the shrinking and swelling behavior is decisive for the further processability of the membrane. Specifically, the dimensional change is defined as follows:

$$\text{dimensional change } [\%] = [(A_{wetted} / A_{dried}) - 1] \times 100$$

In the above equation, $A_{wetted}$ represents the area of the membrane wetted with water and $A_{dried}$ represents the area of the membrane after subsequent drying at a temperature of 70°C until a constant weight has been reached. The dimensional change in water is typically in the range from 1% to 4% in the regions other than the peripheral region connected to the at least one boundary member. As a matter of course, the dimensional change correlates with the extent of hydrolyzation. That is, the larger the saponification degree $SaD_{membrane}$, the larger the dimensional change.

Advantageously, since the membrane of the filter module is characterized by a small shrinking and swelling behavior in water, as expressed by the above-defined dimensional change, the membrane also retains its mechanical stability. Thus, it is not required to chemically modify the membrane, only the surface of which has been saponified.

In a further aspect of the present invention, there is provided a method of producing a filter module comprising an ester-based membrane and at least one boundary member, the method comprising the following steps (a) to (c) in this order:

(a) providing a membrane made of ester and at least one boundary member;

(b) connecting the peripheral region of the membrane to the at least one boundary member, thereby obtaining a precursor of the filter module; and

(c) saponifying the surface of the membrane in the regions other than the peripheral region connected to the at least one boundary member, thereby obtaining the filter module.

In this context, the definitions provided above for the filter module according to the present invention are equally applicable to the method of producing a filter module according to the present invention. This holds particularly true for the components of the filter module. By carrying out the production method according to the present invention, the filter module according to the present invention can be obtained.

In the following, the method of producing a filter module according to the present invention with its specific process steps is described in detail.

In step (a) of the production method according to the present invention, a membrane made of ester and at least one boundary member are provided. Apart from these essential components, a backflow safeguard and/or a core may be provided as additional components in step (a). Furthermore, one or more drainage or support nonwovens may be provided as additional components in step (a). These additional components, if present, are suitably arranged in or on the membrane made of ester. As already outlined above, the membrane made of ester serves as a precursor of the ester-based membrane.

In step (b) of the production method according to the present invention, the peripheral region of the membrane is connected to the at least one boundary member. For doing so, various different means including embedding, overmolding, hydrophobic gluing, or ultrasonic welding may be applied, depending on the shape of the membrane and the shape of the at least one boundary member. As required, e.g. in case of embedding, the at least one boundary member is at least partially softened to allow for a connection. Softening may be achieved by a targeted input of heat at those sites of the at least one boundary member, which shall be connected to the membrane. Suitable means to ensure a targeted input of heat are described in the art. In this regard, the input of heat is routinely adapted by the skilled person in view of the material of the at least one boundary member.

For example, in case the membrane has a tubular shape and the at least one boundary member is an end cap, after softening, the at least one boundary member may be placed onto the peripheral region of the membrane and any additional components, if present, for embedding. As mentioned above, in case there are two open end faces, each of these two open end faces of the membrane may be embedded in a respective boundary member. After embedding, the at least one boundary member with the peripheral region of the membrane embedded therein is cooled to ambient temperature which is understood herein as a temperature of 25°C.

For example, in case the membrane has a flat shape and the at least one boundary member is a frame, the at least one boundary member may be connected to the peripheral region of the membrane and any additional components, if present, by overmolding, hydrophobic gluing, or ultrasonic welding, without, however, being limited to such means.

By carrying out step (b), a precursor of the filter module is obtained. The precursor of the filter module differs from the filter module in that the surface of the membrane is not yet saponified in the regions other than the peripheral region connected to the at least one boundary member.

Before saponification in step (c), the precursor of the filter module may be installed in a housing made of metal or plastic. This applies particularly to filter cartridges which do not have a predefined inlet and outlet yet.

In step (c) of the production method according to the present invention, the surface of the membrane is saponified in the regions other than the peripheral region connected to the at least one boundary member. As it is carried out after connecting the peripheral region of the membrane to the at least one boundary member in step (b), saponification in step (c) is also referred to herein as inline saponification. Typically, step (c) includes rinsing the precursor of the filter module, which is obtained in step (b), with a solution containing a base. Without limitation, the base contained in the solution may be selected from hydroxides and carbonates of alkali metals and alkaline earth metals, including sodium hydroxide (NaOH), potassium hydroxide (KOH), and calcium hydroxide (Ca(OH)$_2$), for example. However, other bases like ammonia (NH$_3$) may be used as well, provided that they can hydrolyze the ester groups present on the surface of the membrane in the regions other than the peripheral region connected to the at least one boundary member. In a preferred embodiment, water is used as the solvent. In other words, it is preferable that the base is contained in an aqueous solution. However, in principle, it is also possible to use an alcohol or the like as the solvent of the solution.

In order to ensure that only the surface but not the bulk of the membrane is saponified in the regions other than the peripheral region connected to the at least one boundary member, the conditions applied during step (c) need to be appropriately set. In case step (c) includes rinsing the precursor of the filter module with a solution containing a base, this can be ensured by controlling the amount of base added, taking into account that saponification takes place almost quantitatively. That is, the amount of base added is almost entirely consumed by the ester groups present in the regions other than the peripheral region of the membrane connected to the at least one boundary member. Once the ester groups come into contact with the solution containing a base, they are immediately hydrolyzed. Thus, hydrolyzation always starts on the surface and proceeds towards the bulk of the membrane. For these reasons, the amount of base added must be substoichiometric so that the ester groups present in the bulk of the membrane are not hydrolyzed.

Determining the substoichiometric amount of base added is exemplarily shown herein by reference to Table 1 below for a membrane made of cellulose acetate:

Table 1

| parameter | typical value |
|---|---|
| mass per area of the membrane m/A | 40 g/m$^2$ |
| saponification degree of the membrane $SaD_{membrane}$ | 15% to 75% |
| substitution number of cellulose acetate $SuN_{CA}$ | 2.5 (at most 3) |
| molar mass of cellulose acetate $M_{CA}$ when $SuN_{CA}$ = 3 | 288 g/mol |
| molar mass of COCH2 $M_{Ac-H}$ | 42 g/mol |
| area of the membrane A | 1 m$^2$ |
| molar amount of (monoacidic) base $n_{base}$ | to be calculated |

$$n_{base} = SaD_{membrane} \ [\%] \times SuN_{CA} \times A \times m/A \div [M_{CA} - (3 - SuN_{CA}) \times M_{Ac-H}]$$

As outlined above, the bulk of the membrane is prevented from being saponified by controlling the extent of hydrolyzation, which can be achieved by adding a substoichiometric amount of base. Once the substoichiometric amount of base to be added has been determined, the solution containing the base may be prepared. Typically, the mass proportion of the base contained in the solution is in the range from 0.05 mass% to 10 mass%, preferably in the range from 0.1 mass% to 4 mass%, and particularly preferably in the range from 0.25 mass% to 1 mass%. Without limitation, the pH is typically in the range from 7 to 14, preferably in the range from 8 to 13, and particularly preferably in the range from 9 to 12. Thus, once the molar amount of (monoacidic) base $n_{base}$ to be added is known, the volume of the solution used for saponification can be calculated in view of the desired mass proportion of the base contained in the solution or in view of the desired pH.

Without limitation, rinsing the precursor of the filter module with a solution containing a base may be carried out as follows:

The membrane of the precursor of the filter module obtained in step (b), being in a dry state, may be wetted with a predefined volume of the solution containing a base, where the predefined volume corresponds to the pore volume of the membrane and also includes the so-called dead volume of the precursor of the filter module. Alternatively, the membrane of the precursor of the filter module obtained in step (b) may be wetted with water before adding the solution containing a base.

Rinsing the precursor of the filter module with a solution containing a base may be followed by autoclaving in step (c). Thereby, saponification and sterilization are accomplished in one step. For example, autoclaving is carried out at a temperature in the range from 100°C to 150°C for a duration of 15 min to 90 min. As a result of the high temperatures applied, hydrolyzation of ester groups also happens to some extent during autoclaving. Before autoclaving, the precursor of the filter module, which has been rinsed with a solution containing a base, may be rinsed with water.

Once the surface of the membrane has been saponified in the regions other than the peripheral region connected to the at least one boundary member, rinsing with water may be carried out to remove the carboxylic acid salt which is formed as a result of saponification. The filter module obtained in step (c) may be dried by flushing with compressed air or by maintaining the filter module in a vacuum dryer, for instance.

Advantageously, the peripheral region of the membrane connected to the at least one boundary member remains unaffected by saponification carried out in step (c). The reason therefor is that the ester groups present in the peripheral region of the membrane are surrounded by the material of the at least one boundary member to which the peripheral region has been connected in step (b). As a consequence, these ester groups do not come into contact with the aqueous solution containing a base, which means that they are not hydrolyzed. Thus, a fluid-tight connection can be maintained. At the same time, as a result of saponification carried out in step (c), the surface of the membrane is rendered hydrophilic in the regions other than the peripheral region connected to the at least one boundary member. Thus, the integrity test or any other process control measure can be passed. Further, since the ester groups present in the bulk of the membrane are not hydrolyzed as a result of appropriately setting the conditions applied during step (c), the membrane does not significantly shrink and swell in water and retains its mechanical stability as it is still characterized by overall physicochemical properties which are characteristic for a membrane made of ester.

Depending on the circumstances, the filter module obtained in step (c) may be sterilized with γ-radiation. Typical radiation doses are in the range from 10 kGy to 200 kGy, without, however, being limited thereto. In case step (c) includes rinsing the precursor of the filter module with an aqueous solution containing a base, where rinsing in step (c) is followed by autoclaving, sterilization is already accomplished by said autoclaving.

Even though the production of the filter module has been described above starting with steps (a) and (b), it should be noted that steps (a) and (b) may be carried out beforehand. Accordingly, the method of producing a filter module according to the present invention may also directly start with the provision of a precursor of the filter module. As recognized by the skilled person, when a precursor of the filter module is provided, steps (a) and (b) of the production method according to the present invention are already realized by said precursor.

In another aspect of the present invention, there is provided the use of the above-described filter module for sterile filtration. Owing to the fluid-tight connection of the peripheral region of the membrane to the at least one boundary member, sterility of the filter module can be ensured. Thus, the filter module according to the present invention is particularly suitable for sterile filtration. Even though the filter module according to the present invention can be suitably used for sterile filtration, it may be used for other filtration techniques as well. As mentioned above, before being used in industrial biopharmaceutical applications, the filter module has to be tested for leakage and pass the integrity test.

The Figures show:

Figure 1 shows a SEM image of the sponge-like structure of a membrane made of cellulose acetate, the surface of which has been saponified, along with a schematic illustration of the circular cross-section of its interconnected elements.

Figure 2 shows the correlation between the measured diffusion and the mass proportion of NaOH in the aqueous solutions used for inline saponification in the Examples described below.

Figure 3 shows the correlation between the measured bubble point and the mass proportion of NaOH in the aqueous solutions used for inline saponification in the Examples described below.

Figure 4 shows the correlation between the measured pH of the fractions and the volume of the combined fractions collected after rinsing with water in the Examples described below.

**Examples**

The present invention is further illustrated by the following Examples without, however, being limited thereto.

Experiments

The goal of the experiments discussed below is to demonstrate that inline saponification renders the surface of the membrane in the regions other than the peripheral region connected to the at least one boundary member hydrophilic. Accordingly, the goal of these experiments is to demonstrate that wettability of a membrane with water can be improved by inline saponification.

Materials and devices

- Sartobran® capsules (filter material: cellulose acetate, pore size: 0.45 μm + 0.2 μm; double layer)
- O 5 L pressure pot equipped with pressure connections
- 2 m water hose equipped with clamps
- 60 mL syringe
- plastic funnel
- ring stand equipped with clamps
- Sartocheck® 4plus filter test
- autoclave
- vacuum drying cabinet

Procedure - Saponification

The surface of the membrane of the Sartobran® capsules, which may be regarded as precursors of the above-described filter module, was saponified by rinsing with aqueous solutions containing NaOH. For this purpose, various NaOH solutions were prepared in accordance with Table 2 below and were placed in the pressure pot, respectively. At

8

the outlet of the pressure pot, the 2 m water hose was attached using one of the clamps.

Table 2

| No. NaOH | mass proportion NaOH [mass%] |
|---|---|
| 1 | 0.25 |
| 2 | 0.75 |
| 3 | 1.25 |
| 4 | 1.75 |
| 5 | 0.10 |
| 6 | 0.25 |
| RO: reverse osmosis | |

The Sartobran® capsules were attached to the end of the 2 m water hose using another clamp. After that, the Sartobran® capsules were fixed using the ring stand and were hung in a sink. Then, the Sartobran® capsules were rinsed with 1L of the respective NaOH solution at a pressure of about 1.0 bar using the pressure pot. When doing so, care had to be taken that the Sartobran® capsules were thoroughly vented so that they were completely rinsed. Subsequently, the Sartobran® capsules were heated at a temperature of 120°C for 60 min in the autoclave.

The above procedure was carried out for each of the NaOH solutions listed in Table 2 above using a respective Sartobran® capsule. For the sake of comparison, a Sartobran® capsule merely rinsed with RO water was also heated at a temperature of 120°C for 60 min in the autoclave. After autoclaving was completed, the Sartobran® capsules were rinsed with 1 L of RO water at a pressure of about 1.0 bar using the pressure pot. Finally, excess water which remained in the Sartobran® capsules was removed.

Procedure - Measurement

The Sartobran® capsules were analyzed in terms of diffusion and bubble point using the Sartocheck® 4plus filter test with the test parameters listed in Table 3 below.

Table 3

| test parameters | values |
|---|---|
| test pressure | 2.500 bar |
| stabilization time | 1 min |
| test time | 1 min |
| diffusion max | 50.0 mL/min |
| bubble point min | 2.600 bar |
| bubble point max | 5.000 bar |
| net volume | AUTO |

Procedure - Drying

For evaluating wettability, the membranes of the Sartobran® capsules had to be dried. For doing so, different drying methods were applied. For each drying method, the unsaponified Sartobran® capsule served as a reference. The 1st drying method included flushing with compressed air at a pressure of 2.5 bar for 24 hours, the 2nd drying method included flushing with compressed air at a pressure of 1.0 bar for 24 hours, and the 3rd drying method included maintaining the Sartobran® capsules in a vacuum dryer at a temperature of 40°C for 24 hours. The scenario where no drying was carried out is referred to as the 0th drying method. In the experiments, the 3rd drying method turned out to be the most efficient and gentle drying method.

Procedure - Wetting

The membranes of the Sartobran® capsules were wetted with water using different wetting methods. The 1st wetting method included rinsing with RO water at a pressure of 1.2 bar for 2 min after drying, the 2nd wetting method included rinsing with RO water at a pressure of 0.3 bar for 5 min after drying, and the 3rd wetting method included adding RO water in the absence of pressurization after drying by attaching the plastic funnel to the Sartobran® capsules with a piece of water hose and filling the funnel with RO water so that it stood above the membranes for 5 min. The scenario where rinsing with RO water at a pressure of 1.0 bar was carried out without drying beforehand is referred to as the 0th wetting method. Once the membranes of the Sartobran® capsules were wetted, the measurements were started without delay using the Sartocheck® 4plus filter test.

Results

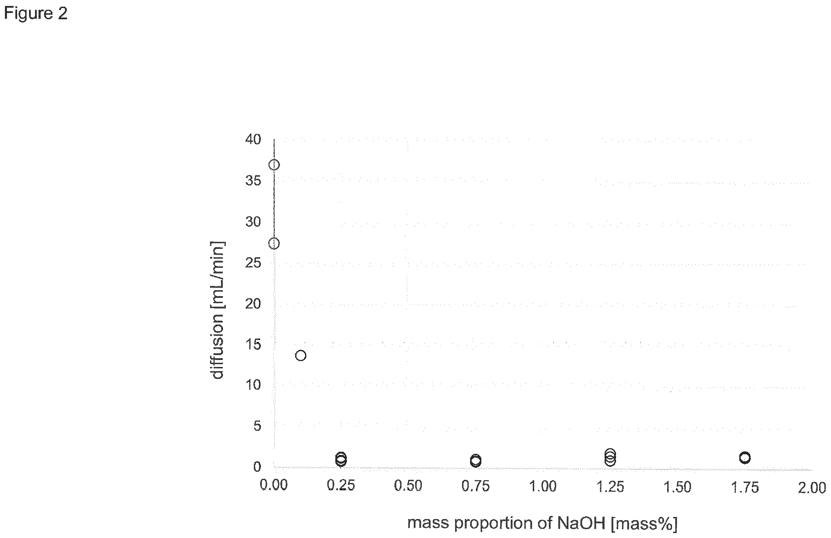

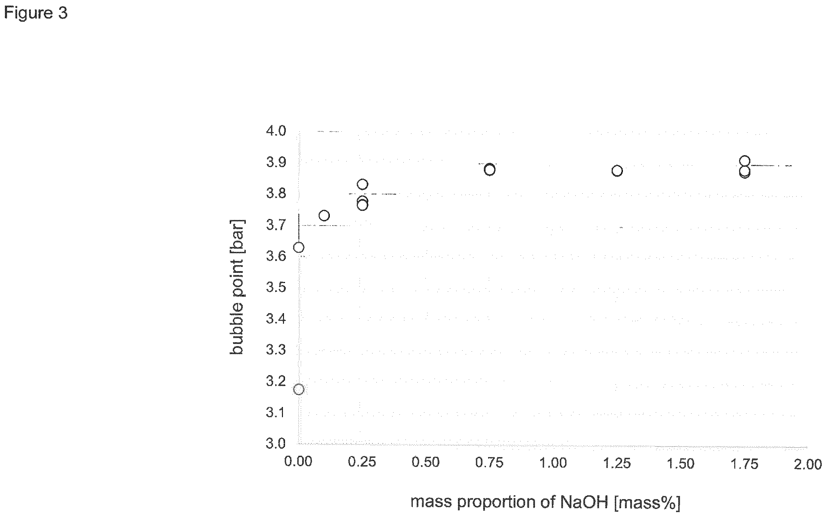

The results obtained from the measurements are summarized in Table 4 below and are illustrated in Figures 2 and 3. As confirmed by the results, inline saponification rendered the surface of the membrane of the Sartobran® capsules in the regions other than the peripheral region connected to the at least one boundary member hydrophilic. In fact, those Sartobran® capsules with a membrane, the surface of which was saponified by rinsing with the respective NaOH solution, showed a strong reduction in diffusion and an increase of bubble point, being an indicator for wettability. Accordingly, it was confirmed that wettability with water could be improved by inline saponification. Moreover, especially when dried in the vacuum dryer, the saponified Sartobran® capsules could be easily tested for leakage while the unsaponified Sartobran® capsule could not.

Table 4

| No. capsule | mass proportion NaOH [mass%] | drying method | wetting method | diffusion [mL/min] | bubble point [bar] |
|---|---|---|---|---|---|
| 1 | --- | 1 | 2 | 13 | 3.826 |
| 2 | --- | 2 | 2 | 5.5 | 3.828 |
| 3 | 0 | 3 | 2 | 37 | 3.175 |
| 4 | 0.25 | 0 | 0 | 1.2 | 3.777 |
| 5 | 0.75 | 0 | 0 | 1.1 | 3.884 |
| 6 | 1.25 | 0 | 0 | 1.5 | 3.880 |
| 7 | 1.75 | 0 | 0 | 1.4 | 3.914 |
| 3 | 0 | 3 | 1 | 27.4 | 3.629 |
| 4 | 0.25 | 3 | 2 | 0.8 | 3.765 |
| 5 | 0.75 | 3 | 2 | 0.8 | 3.879 |
| 6 | 1.25 | 3 | 2 | 1.9 | 3.879 |
| 7 | 1.75 | 3 | 2 | 1.5 | 3.876 |
| 1 | --- | 3 | 3 | not measurable | not measurable |
| 2 | --- | 3 | 3 | not measurable | not measurable |
| 3 | --- | 3 | 3 | not measurable | not measurable |
| 4 | 0.25 | 3 | 3 | 0.9 | 3.764 |
| 5 | 0.75 | 3 | 3 | 0.9 | 3.880 |
| 6 | 1.25 | 3 | 3 | 1 | 3.880 |
| 7 | 1.75 | 3 | 3 | 1.6 | 3.882 |
| 8 | 0.10 | 0 | 0 | 13.7 | 3.730 |
| 9 | 0.25 | 0 | 0 | 1.3 | 3.831 |
| 10 | --- | 0 | 0 | 10.1 | 3.727 |

not measurable: the pressure was not stable which means that large areas of the membrane were not wetted

Table 4 (continued)

| drying method | abbreviation |
|---|---|
| no drying | 0 |
| compressed air, 2.5 bar, 24 hours | 1 |
| compressed air, 1.0 bar, 24 hours | 2 |
| vacuum, 40°C, 24 hours | 3 |

| wetting method | abbreviation |
|---|---|
| RO water, 1.0 bar, without drying beforehand | 0 |
| RO water, 1.2 bar, 2 min | 1 |
| RO water, 0.3 bar, 5 min | 2 |
| RO water, no pressure, 5 min* | 3 |

*time during which RO water stood in the funnel

| No. capsule | saponification |
|---|---|
| 1 | RO water, 120°C, 1 hour |
| 2 | RO water, 120°C, 1 hour |
| 3 | RO water, 120°C, 1 hour |
| 4 | NaOH, 0.25 mass%, 120°C, 1 hour (No. NaOH 1) |
| 5 | NaOH, 0.75 mass%, 120°C, 1 hour (No. NaOH 2) |
| 6 | NaOH, 1.25 mass%, 120°C, 1 hour (No. NaOH 3) |
| 7 | NaOH, 1.75 mass%, 120°C, 1 hour (No. NaOH 4) |
| 8 | NaOH, 0.10 mass%, 120°C, 1 hour (No. NaOH 5) |
| 9 | NaOH, 0.25 mass%, 120°C, 1 hour (No. NaOH 6) |
| 10 | RO water, 120°C, 1 hour |

Additional experiment

In the additional experiment discussed below, two further Sartobran® capsules were saponified. One of them was saponified using an NaOH solution having a mass proportion of 0.10 mass% NaOH to study the effect of insufficient saponification. The other one was saponified using an NaOH solution having a mass proportion of 0.25 mass% NaOH as a reference. In addition, an unsaponified Sartobran® capsule was studied as well in order to account for the effect that autoclaving might have. Each of the three Sartobran® capsules was measured three times in total using the Sartocheck® 4plus filter test. The 1st measurement was immediately taken after saponification which included rinsing with the respective NaOH solution, or rinsing with RO water in case of the unsaponified Sartobran® capsule, and in each case, further included autoclaving followed by rinsing with RO water at a pressure of 1.0 bar. After taking the 1st measurement, the Sartobran® capsules were dried in a vacuum dryer at a temperature of 40°C for 24 hours and then wetted with RO water in the absence of pressurization. After taking the 2nd measurement, the Sartobran® capsules were wetted by rinsing with RO water at a pressure of 0.3 bar for 5 min without being dried beforehand.

Results

Like in the experiments discussed above, the Sartobran® capsule saponified using an NaOH solution having a mass proportion of 0.25 mass% NaOH (capsule No. 9) showed a strong reduction in diffusion and an increase of bubble point. On the other hand, in two out of the three measurements taken, the Sartobran® capsule saponified using an NaOH solution having a mass proportion of 0.10 mass% NaOH (capsule No. 8) showed a rather high diffusion and a bubble point similar to the unsaponified Sartobran® capsule (capsule No. 10). It turned out that the bubble point was less affected by the kind of measurement than the diffusion was. As may be deduced from the results, rinsing with an NaOH solution having a mass proportion of 0.10 mass% NaOH resulted in insufficient saponification but still led to improved wetting. Further, in case of the unsaponified Sartobran® capsule, it was found that autoclaving resulted in hydrolyzation of some of the acetate groups, thereby only leading to a slight improvement of wetting. The results are summarized in Table 5 below.

Table 5

| No. capsule | mass proportion NaOH [mass%] | drying method | wetting method | diffusion [mL/min] | bubble point [bar] |
|---|---|---|---|---|---|
| 8 | 0.10 | 0 | 0 | 13.7 | 3.730 |
| 9 | 0.25 | 0 | 0 | 1.3 | 3.831 |
| 10 | --- | 0 | 0 | 10.1 | 3.727 |
| 8 | 0.10 | 3 | 3 | 3.1 | 3.732 |
| 9 | 0.25 | 3 | 3 | 4.8 | 3.829 |
| 10 | --- | 3 | 3 | 17.9 | 3.722 |
| 8 | 0.10 | 0 | 2 | 10 | 3.732 |
| 9 | 0.25 | 0 | 2 | 4.8 | 3.831 |
| 10 | --- | 0 | 2 | 20.4 | 3.724 |

pH before and after autoclaving

The pH of the NaOH solutions used for saponification was between 12.4 and 13.0, corresponding to the pH of a commercially available soap. Table 6 below lists the pH of some of the NaOH solutions used.

Table 6

| mass proportion NaOH [mass%] | 0 | 0.10 | 0.25 | 0.50 | 0.75 | 1.00 |
|---|---|---|---|---|---|---|
| pH | 6.3 | 12.4 | 12.7 | 12.9 | 12.96 | 13.02 |

After autoclaving, the Sartobran® capsules were rinsed with RO water in a fractionated manner. For this purpose, a 60 mL syringe was prepared with a piece of water hose to be connected to the Sartobran® capsules. The RO water used for rinsing was collected and fractionated into 10 mL fractions, and the pH of each fraction was measured until it reached a constant value of about 6.3, being the pH of the RO water used, corresponding to an NaOH solution having a mass proportion of 0 mass% NaOH.

When saponifying with a NaOH solution having a mass proportion of 0.10 mass% NaOH or more, the pH of the fractions collected after rinsing with RO water was almost constant and similar to the pH of the RO water used.

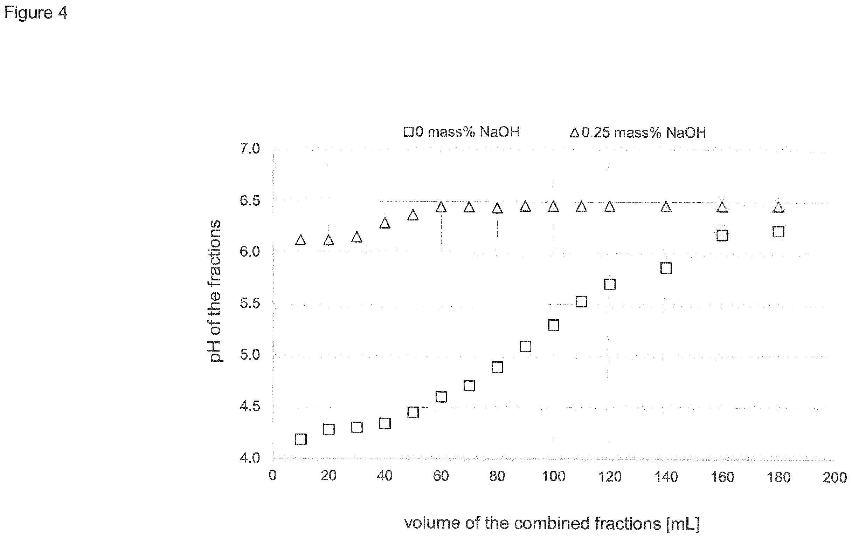

Figure 4 illustrates the results when inline saponification was carried out with an NaOH solution having a mass proportion of 0.25 mass% NaOH. The results for the other NaOH solutions having a mass proportion of 0.10 mass% NaOH or more were almost identical. On the other hand, as can be seen from Figure 4, in case inline saponification was not carried out, the fractions collected after rinsing with RO water were slightly acidic, since some of the acetate groups were hydrolyzed during autoclaving.

Mass proportions of cellulose acetate and regenerated cellulose

To determine the mass proportions of cellulose acetate and regenerated cellulose of a saponified Sartobran® capsule, a sample of the membrane was taken after inline saponification, and the mass of the sample was measured using an analytical balance of sufficient accuracy (0.0001 g). Afterwards, the sample was placed in a flask containing 95 parts by weight of methylene chloride and 5 parts by weight of ethanol, followed by shaking for 5 minutes until the CA portion of the sample was dissolved. After separating the dissolved CA portion from the undissolved RC portion of the sample, the separated portions were dried, and their masses were measured as mentioned above. The mass proportions of cellulose acetate and regenerated cellulose can then be calculated as follows:

$$\text{mass proportion}_{CA} \, [\%] = \frac{m_{CA}}{m_{sample}} \times 100$$

$$\text{mass proportion}_{RC} \, [\%] = \frac{m_{RC}}{m_{sample}} \times 100$$

As found by the present inventors, the membranes spontaneously wetted with water when the mass proportion of RC reaches a value of 10 mass%. However, when the mass proportion of RC exceeded a value of 65 mass%, the dimensional change which is representative for the shrinking and swelling behavior became excessive.

From the masses of cellulose acetate and regenerated cellulose, it is possible to calculate the saponification degree $SaD_{membrane}$, when taking the molar masses of cellulose acetate and regenerated cellulose into account:

$$SaD_{membrane} \, [\%] = \frac{m_{RC}}{M_{RC}} \div \left( \frac{m_{CA}}{M_{CA}} + \frac{m_{RC}}{M_{RC}} \right) \times 100$$

Accordingly, for a mass proportion of RC amounting to 10 mass%, the saponification degree $SaD_{membrane}$ calculates to about 15%, and for a mass proportion of RC amounting to 65 mass%, the saponification degree $SaD_{membrane}$ calculates to about 75%, taking into account that the molar mass of cellulose acetate is 267 g/mol and the molar mass of regenerated cellulose is 162 g/mol, and assuming that the substitution number of cellulose acetate $SuN_{CA}$ is 2.5.

The above results show the beneficial potential of inline saponification, which is even applicable to commercially available systems like the Sartobran® capsule.

**Claims**

1. A filter module comprising an ester-based membrane and at least one boundary member,

   wherein the peripheral region of the membrane is connected to the at least one boundary member, and
   wherein the surface of the membrane is saponified in the regions other than the peripheral region connected to the at least one boundary member.

2. The filter module according to claim 1, wherein the ester constituting the membrane is a cellulose ester.

3. The filter module according to claim 2, wherein the cellulose ester is cellulose acetate.

4. The filter module according to any one of claims 1 to 3, wherein the membrane has a tubular shape and the at least one boundary member is an end cap.

5. The filter module according to any one of claims 1 to 3, wherein the membrane has a flat shape and the at least one boundary member is a frame.

6. The filter module according to any one of claims 1 to 5, wherein the at least one boundary member is formed from a polyolefin.

7. The filter module according to claim 6, wherein the polyolefin is polypropylene.

8. The filter module according to any one of claims 1 to 7, wherein the membrane is not reinforced with a nonwoven.

9. The filter module according to any one of claims 1 to 8, wherein the membrane has a saponification degree $SaD_{membrane}$ in the range from 15% to 75% in the regions other than the peripheral region connected to the at least one boundary member.

10. The filter module according to any one of claims 1 to 9, wherein the membrane has a dimensional change in water in the range from 1% to 4% in the regions other than the peripheral region connected to the at least one boundary member.

11. A method of producing a filter module comprising an ester-based membrane and at least one boundary member, the method comprising the following steps (a) to (c) in this order:

(a) providing a membrane made of ester and at least one boundary member;
(b) connecting the peripheral region of the membrane to the at least one boundary member, thereby obtaining a precursor of the filter module; and
(c) saponifying the surface of the membrane in the regions other than the peripheral region connected to the at least one boundary member, thereby obtaining the filter module.

12. The production method according to claim 11, wherein step (c) includes rinsing the precursor of the filter module with a solution containing a base.

13. The production method according to claim 12, wherein the base contained in the solution is selected from hydroxides and carbonates of alkali metals and alkaline earth metals as well as from ammonia.

14. The production method according to claim 12 or 13, wherein rinsing in step (c) is followed by autoclaving.

15. Use of the filter module according to any one of claims 1 to 10 for sterile filtration.

Figure 1

EP 4 299 165 A1

Figure 2

Figure 3

Figure 4

Europäisches
Patentamt

European
Patent Office

Office européen
des brevets

# EUROPEAN SEARCH REPORT

**Application Number**

EP 22 18 2210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/065587 A1 (SHIGESADA KEIJI [JP] ET AL) 30 March 2006 (2006-03-30)<br>* abstract *<br>* paragraphs [0003], [0004], [0017], [0018] *<br>* claims 1,6,8,10 *<br>----- | 1-15 | INV.<br>B01D63/06<br>B01D63/08<br>B01D65/00<br>B01D71/16<br>B01D67/00 |
| Y | US 2021/001277 A1 (NIKOLOUDIS PASCHALIS [DE] ET AL) 7 January 2021 (2021-01-07)<br>* abstract *<br>* claims 1,3 *<br>* paragraphs [0001], [0046] – [0057] *<br>----- | 1-15 | |
| Y | US 2020/230557 A1 (VAN DER KRUIJS SANDRA [DE] ET AL) 23 July 2020 (2020-07-23)<br>* abstract *<br>* claims 1,7 *<br>* paragraphs [0090] – [0104] *<br>----- | 1-15 | |
| A | US 2008/061001 A1 (TANAKA HIDEAKI [JP] ET AL) 13 March 2008 (2008-03-13)<br>* abstract *<br>* claims 11-13 *<br>* paragraph [0045] *<br>----- | 1-14 | TECHNICAL FIELDS SEARCHED (IPC)<br><br>B01D |

The present search report has been drawn up for all claims

| Place of search | Date of completion of the search | Examiner |
|---|---|---|
| Munich | 8 December 2022 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2210

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2022

| Patent document cited in search report | | Publication date | Patent family member(s) | | Publication date |
|---|---|---|---|---|---|
| US 2006065587 | A1 | 30-03-2006 | JP | 4406344 B2 | 27-01-2010 |
| | | | JP | 2006088659 A | 06-04-2006 |
| | | | US | 2006065587 A1 | 30-03-2006 |
| US 2021001277 | A1 | 07-01-2021 | CN | 111902201 A | 06-11-2020 |
| | | | DE | 102018002261 A1 | 19-09-2019 |
| | | | EP | 3768412 A1 | 27-01-2021 |
| | | | US | 2021001277 A1 | 07-01-2021 |
| | | | WO | 2019179938 A1 | 26-09-2019 |
| US 2020230557 | A1 | 23-07-2020 | CN | 110234420 A | 13-09-2019 |
| | | | DE | 102017000919 A1 | 02-08-2018 |
| | | | EP | 3490695 A1 | 05-06-2019 |
| | | | JP | 6977046 B2 | 08-12-2021 |
| | | | JP | 2020506044 A | 27-02-2020 |
| | | | JP | 2021178325 A | 18-11-2021 |
| | | | US | 2020230557 A1 | 23-07-2020 |
| | | | WO | 2018141437 A1 | 09-08-2018 |
| US 2008061001 | A1 | 13-03-2008 | AT | 540749 T | 15-01-2012 |
| | | | CN | 101090764 A | 19-12-2007 |
| | | | EP | 1789167 A1 | 30-05-2007 |
| | | | JP | 2006083292 A | 30-03-2006 |
| | | | US | 2008061001 A1 | 13-03-2008 |
| | | | WO | 2006030964 A1 | 23-03-2006 |

EPO FORM P0459

For more details about this annex : see Official Journal of the European Patent Office, No. 12/82

**Patent documents cited in the description**

- EP 3490695 B1
- DE 10326741 B4

- WO 2020260473 A1

**Non-patent literature cited in the description**

- Characterization of porous membranes via porometry. **A. SHRESTHA.** Mechanical Engineering Graduate Theses & Dissertations. University of Colorado, 2012

- **R. DAVILA.** *Characterization of ultra and nanofiltration commercial filters by liquid-liquid displacement porosimetry,* 2013